# EUROPÄISCHE PATENTSCHRIFT

(11) **EP 1 310 690 B1**
(45) Veröffentlichungstag und Bekanntmachung des Hinweises auf die Patenterteilung: **28.06.2006**
(21) Anmeldenummer: 02023395.3
(22) Anmeldetag: 18.10.2002
(51) Int. Cl.: F16C 32/04, F16C 39/06, F16C 33/72

(54) **Magnetische Lagerung einer Rotorwelle gegen einen Stator unter Verwendung eines Hoch-Tc-Supraleiters**
Magnetic bearing for a rotor shaft within a stator using a High-Tc superconductor
Palier magnetique pour un arbre de rotor dans un stator utilisant un supraconducteur à Haute-Tc

(30) Priorität: 07.11.2001 DE 10154537
(43) Veröffentlichungstag der Anmeldung: 14.05.2003
(73) Patentinhaber: SIEMENS AKTIENGESELLSCHAFT, 80333 München (DE)
(72) Erfinder: Kummeth, Peter, Dr., 91074 Herzogenaurach (DE)

(56) Entgegenhaltungen:
- DE-A- 4 444 587
- US-A- 4 486 026
- US-A- 4 862 023
- PATENT ABSTRACTS OF JAPAN Bd. 0183, Nr. 74 (M-1638), 14. Juli 1994 (1994-07-14) & JP 6 101715 A (KOYO SEIKO CO LTD), 12. April 1994 (1994-04-12)

## Beschreibung

Die Erfindung betrifft eine magnetische Lagerung einer Rotorwelle gegen einen Stator unter Verwendung eines Hoch-T_{c-}Supraleiters, mit einem an der Rotorwelle drehfest angeordneten ersten Lagerteil umfassend eine Anordnung von nebeneinander angeordneten permanentmagnetischen Elementen mit dazwischen angeordneten Flussführungselementen und einem am Stator vorgesehenen zweiten Lagerteil umfassend eine Struktur aus supraleitendem Hoch-T_{c}-Material, die über einen Lagerspalt voneinander getrennt sind.

Derartige magnetische Lagerungen dienen zur weitgehend verlustfreien Lagerung einer Rotorwelle gegen einen Stator. Eine denkbare Anwendung ist z. B. die Lagerung einer Motorwelle. Beim Betrieb eines solchen magnetischen Lagers wird der Supraleiter beispielsweise unter Verwendung von flüssigem Stickstoff oder mit einer Kältemaschine auf eine Temperatur von ca. 77 K gekühlt. Auch die auf der Rotorwelle vorgesehenen permanentmagnetischen Elemente und die Flussführungselemente der rotorwellenseitigen Anordnung werden über den geringen Abstand zur supraleitenden Struktur auf Temperaturen von ca. 77 K abgekühlt, der beide Anordnungen beabstandende Lagerspalt hat eine Breite von lediglich ca. 1,5 mm. Wenn nun Umgebungsluft ungehindert zum Lagerspalt Zutritt hat so wird die in der Umgebungsluft enthaltende Luftfeuchtigkeit aus der Luft im Lagerspalt an den kalten Lagerteilen ausfrieren und somit der Lagerspalt durch Eis verengt werden. Im Laufe der Zeit friert so der Lagerspalt zu.

Um dem zu begegnen ist es z.B aus DE 44 44 587 A bekannt beispielsweise trockenen gasförmigen Stickstoff in den Lagerspalt einzuleiten. Die hierdurch verursachte Durchströmung oder Durchspülung des Lagerspalts mit trockenem Stickstoff verhindert das Eindringen von feuchter Luft in den Lagerspalt. Nachteilig hierbei jedoch ist der relativ hohe apparative Aufwand sowie der Verbrauch an Spülgas.

Der Erfindung liegt damit das Problem zugrunde, eine demgegenüber verbesserte Lagerung anzugeben.

Zur Lösung dieses Problems ist bei einer Lagerung der eingangs genannten Art erfindungsgemäß vorgesehen, dass Dichtmittel zum Abdichten des Lagerspalts gegen ein Eindringen von Umgebungsluft vorgesehen sind, die eine Bewegung des ersten Lagerteils bezüglich des zweiten Lagerteils in Richtung senkrecht zum Lagerspalt bei gleichzeitig beibehaltener Abdichtung zulassen.

Die Erfindung schlägt vor, bei einer Lagerung eine echte Abdichtung des Lagerspalts unter Verwendung geeigneter Dichtmittel vorzunehmen, um auf diese Weise ein Eindringen von Umgebungsluft in den Lagerspalt von Haus aus zu verhindern. Die Dichtmittel sind erfindungsgemäß jedoch derart beschaffen, dass sie eine Bewegung der beiden Lagerteile zueinander zulassen. Bei einer magnetischen Lagerung der in Rede stehenden Art ist es nach der Montage sämtlicher Komponenten zur "Inbetriebnahme" der Lagerung erforderlich, die Rotorwelle und damit das erste Lagerteil anzuheben und zum zweiten, statorseitig vorgesehenen und feststehenden Lagerteil zu bewegen, wobei beide Lagerteile sich sogar berühren können. Dabei ist die Rotorwelle um maximal die Breite des Lagerspalts, also ca. 1,5 mm anzuheben. Nach Erreichen des supraleitenden Zustands bei hinreichender Abkühlung können in der supraleitenden Struktur Ströme verlustfrei fließen. Das Absenken der Rotorwelle aufgrund des Eigengewichts induziert in der supraleitenden Struktur, bedingt durch die benachbarten permanentmagnetischen Elemente, Ströme. Die Wechselwirkung des so erzeugten Magnetfelds mit dem Feld der Permanentmagneten trägt die Rotorwelle berührungsfrei. Damit bei dieser zwingend vorzunehmenden Handlung vermieden wird, dass Umgebungsluft eindringt und so die eingangs genannten Nachteile entstehen können, sind die verwendeten Dichtmittel derart ausgebildet, dass sie diese Bewegung zulassen bzw. kompensieren, wobei sie dabei ihre Dichteigenschaften jedoch nicht verlieren.

Dabei können die Dichtmittel als ringförmige Dichtelemente ausgebildet sein, die entweder direkt zur Rotorwelle hin abdichten, oder aber zum ersten Lagerteil, welches drehfest auf der Rotorwelle befestigt ist. Auf der anderen Seite dichten die Dichtmittel natürlich zum Stator oder zum zweiten Lagerteil hin ab.

In einer ersten Erfindungsausgestaltung kann vorgesehen sein, dass die ringförmigen Dichtelemente eine hinreichende, die Bewegung des ersten Lagerteils bezüglich des zweiten Lagerteils zulassende Eigenelastizität aufweisen. Das heißt die verwendeten Dichtelemente können ohne Verlust ihrer Dichteigenschaften im Rahmen der sehr kurzen Bewegung verformt werden.

Alternativ dazu kann vorgesehen sein, dass die ringförmigen Dichtelemente an einem eine hinreichende Elastizität aufweisenden Abschnitt am Statorgehäuse gehaltert sind. Bei dieser Erfindungsausgestaltung wird also die erforderliche Bewegbarkeit der Dichtelemente über einen entsprechenden elastischen und damit bewegbaren oder verformbaren Lager- oder Halteabschnitt für die Dichtelemente am Statorgehäuse realisiert. Hierfür kann beispielsweise am Statorgehäuse beidseits des Lagerspalts jeweils ein im Wesentlichen parallel zur Rotorwelle verlaufender, aufgrund der ringförmigen Ausführung der Dichtelemente im Wesentlichen rohrförmige elastischer Gehäuseabschnitt vorgesehen sein. Dieser Abschnitt kann beispielsweise in Form eines Wellrohr- oder eines Wellschlauchabschnitts, also faltenbalgartig ausgebildet sein. Wichtig ist in jedem Fall, dass er eine bezogen auf die Rotorwelle radiale Elastizität und Bewegbarkeit aufweist. Die den Wellrohr- oder Wellschlauchabschnitt konzentrisch durchsetzende Rotorwelle sowie die konzentrisch angeordneten ringförmigen Dichtmittel, die zur Rotorwelle bzw. zum ersten Lagerteil einerseits und zum Wellrohr- oder Wellschlauchabschnitt andererseits abdichten, können so ohne Probleme angehoben werden, wobei sich hierbei lediglich der Wellrohr- oder Wellschlauchabschnitt leicht verbiegt. Die Abdichtung über die Dichtmittel geht hierbei nicht verloren.

In Weiterbildung des Erfindungsgedankens kann vorgesehen sein, dass wenigstens eine Zuleitung für ein Spülgas in dem Bereich des Lagerspalts vorgesehen ist. Diese Zuleitung kann dann zweckmäßig sein, wenn es sich bei den verwendeten Dichtmitteln nicht um hermetisch abdichtende Dichtmittel handelt, sondern um solche, die eine minimale Undichtigkeit aufweisen. Das Spülgas dient in diesem Fall lediglich dazu, von Zeit zu Zeit, also intermittierend den Lagerspalt kurz zu spülen, da aufgrund der Dichtmittel verhindert wird, dass allzu viel feuchte Umgebungsluft eindringt, so dass der Anstieg des Feuchtegehalts im Lagerspalt bezogen auf die Zeit sehr gering ist, weshalb eine nur ab und zu erfolgende Spülung ausreichend ist. Dabei sollte zweckmäßigerweise als Spülgas ein trockenes Gas, beispielsweise trockener Stickstoff oder trockene Luft verwendet werden. Die Zuleitung für ein Spülgas ist aber auch dann von Vorteil, wenn hermetische Dichtmittel zum Einsatz kommen. Denn mit zunehmender Abkühlung wird auch die im Lagerspalt vorhandene Luft stark abgekühlt, so dass in diesem Bereich ein Unterdruck entsteht, der über einen kurzen Druckausgleich ausgeglichen werden kann. Dies kann durch kurzzeitiges Öffnen und sofortiges Schließen der Spülgaszufuhr erfolgen, wobei in diesem Fall sogar Umgebungsluft zum Druckausgleich verwendet werden kann, da die zum Druckausgleich erforderliche Menge sehr gering ist und infolgedessen der Feuchteanteil im Lagerspalt auch bei einem Druckausgleich mit Umgebungsluft sehr niedrig ist, so dass ein Zufrieren nicht möglich ist. Ein Vorteil dieses Druckausgleichs liegt insbesondere darin, dass die verwendeten Dichtmittel keiner aus einem Unterdruck im Lagerspalt resultierenden Druckdifferenz standhalten müssen, sondern lediglich ihre eigene DichtWirkung erfüllen und das Eindringen und die Durchströmung des Lagerspalts mit feuchter Raumluft verhindern müssen.

Als Dichtmittel oder Dichtelemente können erfindungsgemäß alle dem Fachmann bekannten Dichtungen verwendet werden. Zweckmäßig sind dabei Lamellendichtringe, Labyrinthdichtringe, Simmerringe oder Ferrofluiddichtungen.

Eine Ferrofluiddichtung, die eine Bewegung der beiden Lagerteile zueinander zulässt und nicht an einem diese Beweglichkeit im Hinblick auf die Dichtung ermöglichenden elastischen Gehäuseabschnitt angeordnet sein muss zeichnet sich dadurch aus, dass sie ein erstes Dichtungsteil, das statorseitig angeordnet ist, und ein zweites Dichtungsteil, das rotorwellenseitig angeordnet ist, aufweist, wobei jedes Dichtungsteil ein ringförmiges permanentmagnetisches Element mit zugeordnetem ringförmigen Flussführungselement umfasst, wobei im Luftspalt zwischen den einander gegenüberliegenden Flussführungselementen das Ferrofluid eingeschlossen ist, und wobei beide Anordnungen bei einer Bewegung der Rotorwelle bezüglich des Stators gegeneinander unter Beibehaltung des Einschlusses des Ferrofluids verschiebbar sind. Diese Ferrofluiddichtung zeichnet sich dadurch aus, dass ihre Komponenten ringförmig ausgeführt sind und radial bezüglich der Rotorwelle abstehen, das heißt die entsprechenden ringförmigen Komponenten sind axial hintereinander angeordnet. Diese Anordnung lässt mit besonderem Vorteil eine Verschiebung der beiden Lagerteile bezüglich einander zu, wobei das die Dichtung bewirkende Ferrofluid nach wie vor eingeschlossen bleibt. Die permanentmagnetischen Elemente und die Flussführungselemente beider Dichtungsteile weisen jeweils im Wesentlichen gleiche Innen- und Außendurchmesser auf. Dabei sollte die Breite der den Luftspalt begrenzenden Überlappungsfläche der Flussführungselemente derart groß sein, dass bei einer maximalen Verschiebung der Anordnungen zueinander eine den Einschluss des gesamten Ferrofluids gewährleistende Mindestüberlappung verbleibt. Die Breite des Überlappungsbereiches der Flussführungselemente, die quasi axial gesehen spiegelsymmetrisch zueinander angeordnet sind, ist derart bemessen, dass auch bei einer Verschiebung sie sich im maximalen Verschiebebereich nach wie vor soweit überlappen, dass sichergestellt ist, dass das Ferrofluid eingeschlossen bleibt, so dass die Dichtwirkung bestehen bleibt.

Damit vermieden wird, dass die beiden Lagerteile der erfindungsgemäßen Ferrofluiddichtung sich aufgrund der magnetischen Eigenschaften einander annähern ist zweckmäßigerweise wenigstens ein Abstandshalter vorgesehen, mittels dem beide Anordnungen auch bei einer Verschiebung bezüglich einander beabstandet sind. Dieser Abstandshalter kann beispielsweise ein kraftschlüssiges, eine Rotation der beiden Dichtungsteile bezüglich einander ermöglichendes Lager sein, das einen mit einer Rückstellkraft beaufschlagten Lagerring umfasst, mittels dem beide Dichtungsteile voneinander weggedrückt werden.

Weitere Vorteile, Merkmale und Einzelheiten der Erfindung ergeben sich aus den im folgenden Ausführungsbeispielen sowie anhand der Zeichnungen. Dabei zeigen:
- Fig. 1: eine Prinzipdarstellung einer erfindungsgemäßen magnetischen Lagerung einer ersten Ausführungsform,
- Fig. 2: eine Prinzipskizze einer erfindungsgemäßen magnetischen Lagerung einer zweiten Ausführungsform, und
- Fig. 3: eine vergrößerte Teilansicht eines Ferrofluidlagers.

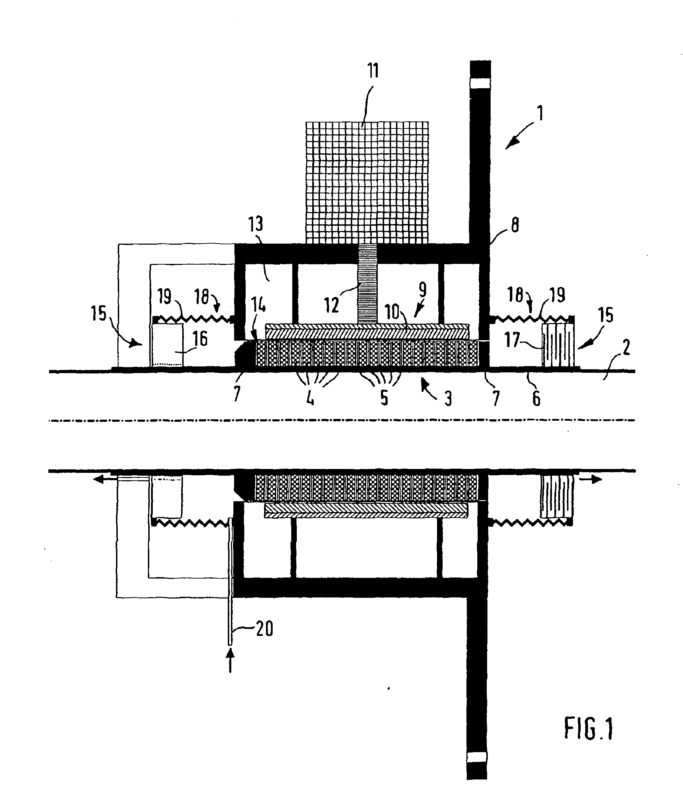

Fig. 1 zeigt eine erfindungsgemäße magnetische Lagerung 1 einer ersten Ausführungsform. An einer Rotorwelle 2, z. B. einer Motorwelle ist ein erstes Lagerteil 3 umfassend mehrere permanentmagnetische Elemente 4 mit zwischengeordneten Flussführungsstücken 5, die auf einem rohrförmigen Träger 6 angeordnet sind, drehfest beispielsweise über eine nicht gezeigte Madenschraube oder dergleichen befestigt. Die permanentmagnetischen Elemente und die Flussführungselemente sind über Endstücke 7 in ihrer Lage fixiert. In einem Statorgehäuse 8 ist ein zweites Lagerteil 9 umfassend eine supraleitende Struktur 10 aus einem Hoch-T_{c}-Supraleitermaterial (z. B. YBCO) lagefest angeordnet. Die supraleitende Struktur wird mittels eines Kaltkopfes 11 über einen Wärmebus 12 auf eine Temperatur von ca. 77K gekühlt. Der Innenraum 13 des Statorgehäuses kann mit einem Isolationsmaterial, beispielsweise einem Isolationsschaum gefüllt oder aber als Vakuumraum ausgebildet sein.

Die beiden Lagerteile 3 und 9 sind über einen schmalen Lagerspalt 14 voneinander getrennt. Nach Inbetriebnahme der magnetischen Lagerung umgibt der ringförmige Lagerspalt 14 das erste Lagerteil 3 allseitig, das heißt die Rotorwelle 2 bzw. das Lagerteil 3 schwebt in der supraleitenden Struktur 10, sie berühren einander nicht. Die Breite des ringförmigen Lagerspalts 14 liegt zwischen 1 - 2 mm, normalerweise bei ca. 1,5, mm, wobei die genaue Abmessung natürlich abhängig von der Größe der Lagerung ist.

Da aufgrund der extremen Kühlung der supraleitenden Struktur 10 auch die gegenüberliegende Anordnung aus permanentmagnetischen Elementen 4 und Flussführungselementen 5 und natürlich auch die im Lagerspalt 14 vorhandene Luft entsprechend gekühlt wird, kann es bei vorhandener Luftfeuchte im Lagerspalt 14 zu einem Ausfrieren der Feuchte und damit einer Vereisung des Lagerspalts mit zunehmender Betriebsdauer kommen. Um dem entgegenzuwirken sind beidseitig des Lagerspalts 14 zwei Dichtmittel 15 vorgesehen, bei denen es sich um unterschiedliche Dichtungsarten handeln kann. Beispielsweise können die Dichtmittel als Ferrofluiddichtung 16 ausgeführt sein, wie in dem linken Bildteil dargestellt, eine andere Ausführungsform ist eine Dichtung in Form einer Labyrinth- oder Lamellendichtung 17, wie im rechten Bildteil dargestellt ist. Jede Dichtung ist ringförmig. Wie Fig. 1 zeigt ist jede ringförmige Dichtung in einem elastischen Gehäuseabschnitt 18 aufgenommen, bei dem es sich im gezeigten Beispiel um einen Wellrohr- oder Wellschlauchabschnitt 19 handelt, der ebenfalls axialsymmetrisch angeordnet ist und die Dichtungen randseitig aufnimmt. Der Wellrohr- oder Wellschlauchabschnitt 19 ist hinreichend flexibel, das heißt er ist imstande entsprechende Bewegungen der Rotorwelle 2 nachzuvollziehen und mitzumachen. Die jeweiligen ringförmigen Dichtmittel sind an dem elastischen Gehäuseabschnitt 18 dicht befestigt, das heißt sie dichten nach oben hin zu diesem Abschnitt ab. Mit ihrem unteren Dichtende, also an ihrer Innenwandung oder am Innendurchmesser, dichten sie zu dem Träger 6 des ersten Lagerteils 3 hin ab, wobei der Träger 6 drehbeweglich bezüglich der feststehenden Dichtungen ist. Ersichtlich wird der Luftspalt 14 beidseitig über die Dichtmittel 15 vollständig nach außen hin abgedichtet.

Wie Fig. 1 ferner im unteren Bildteil zeigt ist eine Zuleitung 20 für ein Spülgas, beispielsweise Stickstoff oder dergleichen vorgesehen, über die das Spülgas in dem Bereich des Luftspalts 14 und in den Bereich zwischen die Dichtmittel 15 gespült werden kann. Hierüber ist eine intermittierende Spülung des Luftspalts mit einem feuchtefreien Spülgas möglich. Das Spülgas kann über die Dichtmittel wieder austreten.

Soll nun nach der Montage die magnetische Lagerung in Betrieb genommen werden, so ist es erforderlich, die Rotorwelle 2 samt dem ersten Lagerteil 3 anzuheben, so dass das erste Lagerteil 3 beispielsweise mit seinem oberen Ende näher an die supraleitende Struktur, gegebenenfalls bis zur Berührung geführt wird. Der Bewegungsweg beträgt abhängig von der Breite des resultierenden Lagerspalts ebenfalls zwischen 1 - 2 mm. Die supraleitende Struktur 10 wird gekühlt. Nach Erreichen der Sprungtemperatur geht die supraleitende Struktur von ihrem bis dahin gegebenen normalleitenden Zustand in den supraleitenden Zustand über, wonach induzierte Ströme quasi verlustfrei fließen können. Durch das Absenken der Welle werden aufgrund der Anordnung der permanentmagnetischen Elemente und der resultierenden Magnetfelder Ströme in der supraleitenden Struktur 10 induziert. Die induzierten Ströme erzeugen ihrerseits ein Magnetfeld, das dem Magnetfeld der permanentmagnetischen Elemente entgegensteht und mithin die Rotorwelle 2, die frei in der supraleitenden Struktur 10 schwebt, trägt.

Aufgrund der Aufnahme der Dichtmittel 15 in den elastischen Gehäuseabschnitten 18 werden die Dichtmittel 15 bei der Bewegung der Welle mitbewegt und der elastische Gehäuseabschnitt 18 etwas verformt, beispielsweise etwas nach oben gebogen, wobei die Verbiegung maximal dem Bewegungsweg der Rotorwelle 2 entspricht. Das heißt die Dichtwirkung der Dichtmittel 15 bleibt auch während der Wellenbewegung zum Anheben oder Absenken bestehen.

Bei den verwendeten Dichtmitteln kann es sich um solche handeln, die hermetisch abdichten, das heißt es ist über die Dichtmittel kein Gasaustausch zwischen dem Bereich innerhalb der magnetischen Lagerung und der Umgebung möglich. In einem solchen Fall kann auf die Verwendung der Zuleitung 20 und den Einsatz des Spülgases verzichtet werden. Gleichwohl ist auch in diesem Fall eine derartige Ausbildung zweckmäßig, da beim Abkühlen der zwischen den Dichtmitteln 15 vorhandenen Restluft ein Unterdruck entsteht, der auf die Dichtmittel 15 wirkt. Über die Zuleitung 20 kann so durch kurzzeitiges Öffnen und Schließen ein Druckausgleich vorgenommen werden, so dass die Dichtmittel 15 keiner Druckdifferenz standhalten müssen, sondern nur das Eindringen von Raum- oder Umgebungsluft in den Bereich zum Lagerspalt 14 verhindern müssen.

Falls es sich bei den Dichtmitteln 15 um solche handelt, die nicht hermetisch abdichten ist über die Zuleitung 20 eine intermittierende Zufuhr von Spülgas möglich, um den Lagerspalt 14 bzw. den Innenraum zwischen den Dichtmitteln 15 von Zeit zu Zeit mit feuchtefreier Luft zu durchspülen. Ein Eindringen von feuchter Umgebungsluft wird über die Dichtmittel 15 weitestgehend vermieden bzw. soweit unterbunden, dass der Feuchtegehalt mit der Betriebsdauer nur sehr langsam ansteigt, so dass ein Durchspülen in relativ großzügigen Abständen ohne der Gefahr einer Vereisung möglich ist.

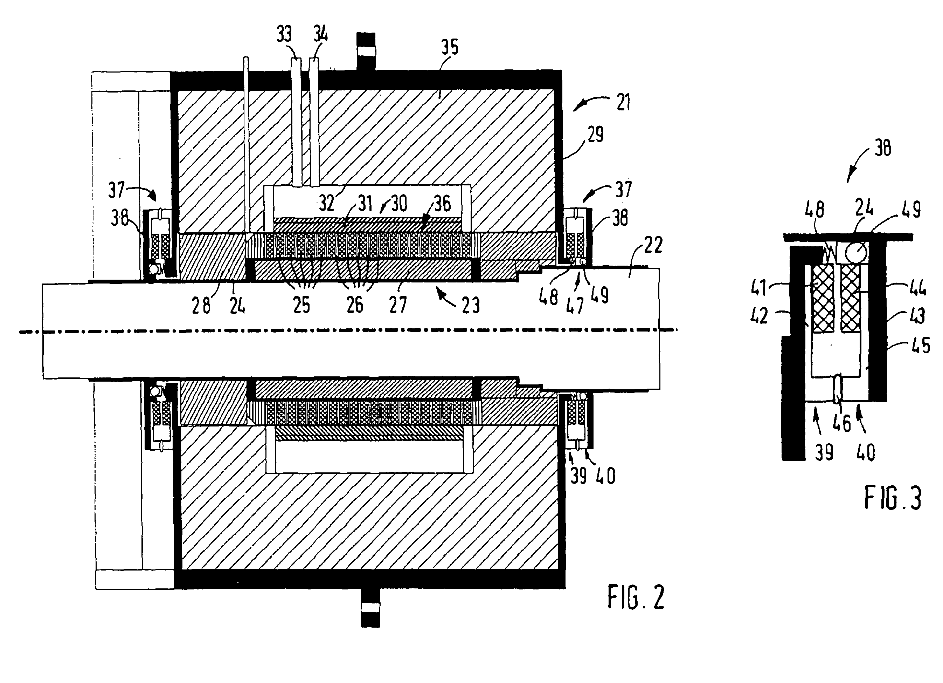

Fig. 2 zeigt eine weitere Ausführungsform einer erfindungsgemäßen magnetischen Lagerung 21. Auch hier ist an der Rotorwelle 22 ein erstes Lagerteil 23 umfassend mehrere auf einem rohrartigen Träger 24 angeordnete permanentmagnetische Elemente 25 mit zwischengeordneten Flussführungselementen 26 vorgesehen, wobei am rohrartigen Träger 24 eine mit einem Isolationsmaterial 27 gefüllte Kammer vorgesehen ist, über die ein Wärmedurchtritt von der auf Raumtemperatur befindlichen Rotorwelle zu den permanentmagnetischen Elementen und den Flussführungselementen vermieden wird. Das erste Lagerteil 1 weist ferner eine beidseitige Schaumstoff-Isolation 28 auf.

In einem Statorgehäuse 29 ist ein zweites Lagerteil 30 umfassend eine supraleitende Struktur 31 vorgesehen, die in einem mit flüssigen Stickstoff gefüllten Kryobehälter 32 angeordnet ist, der über Zu- und Abführleitungen 33, 34 mit flüssigem Stickstoff gefüllt werden kann. Das erste Lagerteil bzw. der Kryobehälter 32 ist in einer Schaumstoff-Isolation 35 aufgenommen.

Auch hier sind die beiden Lagerteile 23, 30 über einen schmalen Lagerspalt 36 voneinander getrennt. Zur Abdichtung des Lagerspalts nach außen sind auch hier Dichtmittel 37 vorgesehen, wobei es sich bei diesen um eine Ferrofluiddichtung 38 handelt. Das erste Dichtungsteil 39 ist statorseitig am Statorgehäuse 29 fest angeordnet und umfasst ein ringförmiges permanentmagnetisches Element 41 und ein mit diesem verbundenes Flussführungselement 42, was ebenfalls ringförmig ausgebildet ist. Beide stehen bezogen auf die Rotorwelle radial ab, am Flussführungselement ist ein randseitiger axialer Vorsprung vorgesehen. Das zweite Dichtungsteil 40 ist an einem rotorwellenseitigen, radial abstehenden Bund 43 befestigt und umfasst ebenfalls ein ringförmiges permanentmagnetisches Element 44 und ein Flussführungselement 45, die die gleichen Bemaßungen haben wie die Teile des ersten Dichtungselements, so dass die permanentmagnetischen Elemente 41, 44 einander direkt gegenüberstehen. Entsprechendes gilt für die Flussführungselemente 42, 45, wobei diese so angeordnet sind, dass die axialen randseitigen Abschnitte aufeinander zuweisen. Zwischen diesen Abschnitten ist ein Ferrofluid 46 eingeschlossen, das die Dichtung erzielt.

Ersichtlich sind die beiden Dichtungsteile 39, 40 bezüglich einander drehbeweglich, wobei das erste Dichtungsteil 39 feststeht und das zweite Dichtungsteil 40 bezüglich des ersten Dichtungsteils bewegt wird. Die axialen Abschnitte der Flussführungselemente 42, 45 bewegen sich aneinander vorbei, das Ferrofluid 46 bleibt während dieser Bewegung zwischen beiden eingeschlossen.

Aufgrund des axial gesehen symmetrischen Aufbaus der Ferrofluiddichtung 38 ist es möglich, die Rotorwelle 22 und mit ihr das zweite Dichtungsteil 40 anzuheben, so dass das zweite Dichtungsteil 40 bezüglich des feststehenden ersten Dichtungsteils 39 verschoben wird. Dabei werden auch die das Ferrofluid 46 einschließenden axialen Abschnitte der Flussführungselemente 42, 45 bezüglich einander verschoben. Sie sind in ihrer Breite jedoch so bemessen, dass sich trotz Verschiebung noch ein hinreichender Überlappungsbereich ergibt, in dem das Ferrofluid eingeschlossen bleibt. Das heißt die Ferrofluiddichtung behält ihre Dichteigenschaft auch dann wenn die Rotorwelle 22 angehoben wird.

Um zu vermeiden, dass während der Anhebe- oder Absenkbewegung der Rotorwelle 22 oder während des Betriebs aufgrund einer axialen Verschiebung der Lagerung 21 die beiden Dichtungsteile 39, 40 der Ferrofluiddichtung einander berühren ist ein Abstandshalter 47 vorgesehen, über den die beiden Dichtungsteile 39, 40 auf Abstand gehalten werden. Dieser Abstandshalter 47 ist als ein kraftschlüssiges, eine Rotation ermöglichendes Lager ausgebildet, das feststehend am Statorgehäuse 29 angeordnet ist und einen über Druckfedern 48 federbeaufschlagten Lagerring 49 umfasst, der die beiden Dichtungsteile 39, 40 voneinander wegdrückt. Über dieses axiale Lager wird eine Berührung beider Dichtungsteile ausgeschlossen.

## Patentansprüche

1. Magnetische Lagerung einer Rotorwelle gegen einen Stator unter Verwendung eines Hoch-T_{c}-Supraleiters, mit einem an der Rotorwelle drehfest angeordneten ersten Lagerteil umfassend eine Anordnung von nebeneinander angeordneten permanentmagnetischen Elementen mit dazwischen angeordneten Flussführungselementen und einem am Stator vorgesehenen zweiten Lagerteil umfassend eine Struktur aus supraleitendem Hoch - Tc - Material, die über einen Lagerspalt voneinander getrennt sind, **dadurch gekennzeichnet, dass** Dichtmittel (15, 37) zum Abdichten des Lagerspalts (14, 36) gegen ein Eindringen von Umgebungsluft vorgesehen sind, die eine Bewegung des ersten Lagerteils (3, 23) bezüglich des zweiten Lagerteils (9, 30) in Richtung senkrecht zum Lagerspalt bei gleichzeitig beibehaltener Abdichtung zulassen.

2. Magnetische Lagerung nach Anspruch 1, **dadurch gekennzeichnet, dass** die Dichtmittel (15, 37) als ringförmige Dichtelemente (16, 17, 38) ausgebildet sind, die zur Rotorwelle (2, 22) oder zum ersten Lagerteil (3, 23) hin abdichten.

3. Magnetische Lagerung nach Anspruch 2, **dadurch gekennzeichnet, dass** die ringförmigen Dichtelemente (16, 17, 38) eine hinreichende, die Bewegung des ersten Lagerteils (3, 23) bezüglich des zweiten Lagerteils (9, 30) zulassende Eigenelastizität aufweisen.

4. Magnetische Lagerung nach Anspruch 2, **dadurch gekennzeichnet, dass** die ringförmigen Dichtelemente (16, 17) an einem eine hinreichende Elastizität aufweisenden Abschnitt (18) am Statorgehäuse (8) gehaltert sind.

5. Magnetische Lagerung nach Anspruch 4, **dadurch gekennzeichnet, dass** am Statorgehäuse (8) beidseits des Lagerspalts (14) ein im Wesentlichen parallel zur Rotorwelle (2) verlaufender elastischer Gehäuseabschnitt (18) vorgesehen ist.

6. Magnetische Lagerung nach Anspruch 5, **dadurch gekennzeichnet, dass** der Gehäuseabschnitt (18) in Form eines Wellrohr- oder Wellschlauchabschnitts (19) ausgebildet ist.

7. Magnetische Lagerung nach einem der vorangehenden Ansprüche, **dadurch gekennzeichnet, dass** wenigstens eine Zuleitung (20) für ein Spülgas in den Bereich des Lagerspalts (14) vorgesehen ist.

8. Magnetische Lagerung nach einem der vorangehenden Ansprüche, **dadurch gekennzeichnet, dass** als Dichtmittel (15, 37) oder Dichtelemente (16, 17, 38) Lamellendichtringe (17), Labyrinthdichtringe (17), Simmerringe oder Ferrofluiddichtungen (16, 38) vorgesehen sind.

9. Magnetische Lagerung nach Anspruch 8, **dadurch gekennzeichnet, dass** eine Ferrofluiddichtung (38) ein erstes Dichtungsteil (39), das statorseitig angeordnet ist, und ein zweites Dichtungsteil (40), das rotorwellenseitig angeordnet ist, aufweist, wobei jedes Dichtungsteil (39, 40) ein ringförmiges permanentmagnetisches Element (41, 44) mit zugeordnetem ringförmigen Flussführungselement (42, 45) umfasst, wobei im Luftspalt zwischen den einander gegenüber liegenden Flussführungselementen (42, 45) das Ferrofluid (46) eingeschlossen ist, und wobei beide Dichtungsteile (39, 40) bei einer Bewegung der Rotorwelle (22) bezüglich des Stators (29) gegeneinander unter Beibehaltung des Einschlusses des Ferrofluids (46) verschiebbar sind.

10. Magnetische Lagerung nach Anspruch 9, **dadurch gekennzeichnet, dass** die permanentmagnetischen Elemente (41, 44) und die Flussführungselemente (42, 45) beider Dichtungsteile (39, 40) jeweils im Wesentlichen gleiche Innen- und Außendurchmesser aufweisen.

11. Magnetische Lagerung nach Anspruch 9 oder 10, **dadurch gekennzeichnet, dass** Breite der den Luftspalt begrenzende Überlappungsfläche der Flussführungselemente (42, 45) derart groß ist, dass bei einer maximalen Verschiebung der Dichtungsteile (39, 40) zueinander eine den Einschluss des gesamten Ferrofluids (46) gewährleistende Mindestüberlappung verbleibt.

12. Magnetische Lagerung nach einem der Ansprüche 9 bis 11, **dadurch gekennzeichnet, dass** wenigstens ein Abstandshalter (47) vorgesehen ist, mittels dem beide Dichtungsteils (39, 40) auch bei einer Verschiebung bezüglich einander beabstandet sind.

13. Magnetische Lagerung nach Anspruch 12, **dadurch gekennzeichnet, dass** der Abstandshalter (47) ein kraftschlüssiges, eine Rotation der beiden Dichtungsteile (39, 40) bezüglich einander ermöglichendes Lager ist.

14. Magnetische Lagerung nach Anspruch 13, **dadurch gekennzeichnet, dass** das Lager einen mit einer Rückstellkraft (48) beaufschlagten Lagerring (49) umfasst, mittels dem beide Dichtungsteile (39, 40) voneinander weggedrückt werden.

## Claims

1. Magnetic mounting of a rotor shaft relative to a stator, using a high-T_{c} superconductor, with a first bearing part arranged fixedly in terms of rotation on the rotor shaft and comprising an arrangement of permanent-magnetic elements arranged next to one another and having flux guide elements arranged between them, and with a second bearing part provided on the stator and comprising a structure consisting of superconductive high-T_{c} material, said bearing parts being separated from one another via a bearing gap, **characterized in that** sealing means (15, 37) are provided for sealing off the bearing gap (14, 36) against a penetration of ambient air, said sealing means allowing a movement of the first bearing part (3, 23) with respect to the second bearing part (9, 30) in the direction perpendicular to the bearing gap, while at the same time sealing-off being maintained.

2. Magnetic mounting according to Claim 1, **characterized in that** the sealing means (15, 37) are designed as annular sealing elements (16, 17, 38) which seal off in relation to the rotor shaft (2, 22) or in relation to the first bearing part (3, 23).

3. Magnetic mounting according to Claim 2, **characterized in that** the annular sealing elements (16, 17, 38) have a sufficient intrinsic elasticity allowing the movement of the first bearing part (3, 23) with respect to the second bearing part (9, 30).

4. Magnetic mounting according to Claim 2, **characterized in that** the annular sealing elements (16, 17) are held on the stator housing (8) at a portion (18) having sufficient elasticity.

5. Magnetic mounting according to Claim 4, **characterized in that** an elastic housing portion (18) running essentially parallel to the rotor shaft (2) is provided on the stator housing (8) on both sides of the bearing gap (14).

6. Magnetic mounting according to Claim 5, **characterized in that** the housing portion (18) is designed in the form of a corrugated-tube or corrugated-hose portion (19).

7. Magnetic mounting according to one of the preceding claims, **characterized in that** at least one feed line (20) for feeding a scavenging gas into the region of the bearing gap (14) is provided.

8. Magnetic mounting according to one of the preceding claims, **characterized in that** lamella sealing rings (17), labyrinth sealing rings (17), radial packing rings or ferrofluidic seals (16, 38) are provided as sealing means (15, 37) or sealing elements (16, 17, 38).

9. Magnetic mounting according to Claim 8, **characterized in that** a ferrofluidic seal (38) has a first seal part (39), which is arranged on the stator side, and a second seal part (40), which is arranged on the rotor-shaft side, each seal part (39, 40) comprising an annular permanent-magnetic element (41, 44) with an associated annular flux guide element (42, 45), the ferrofluid (46) being enclosed in the air gap between the flux guide elements (42, 45) located opposite one another, and, in the event of a movement of the rotor shaft (22) with respect to the stator (29), the two seal parts (39, 40) being displaceable relative to one another, with the enclosing of the ferrofluid (46) at the same time being maintained.

10. Magnetic mounting according to Claim 9, **characterized in that** the permanent-magnetic elements (41, 44) and the flux guide elements (42, 45) of the two seal parts (39, 40) in each case have essentially identical inside and outside diameters.

11. Magnetic mounting according to Claim 9 or 10, **characterized in that** the width of the overlap area of the flux guide elements (42, 45) which delimits the air gap is such that, in the event of a maximum displacement of the seal parts (39, 40) in relation to one another, a minimum overlap ensuring the enclosing of the entire ferrofluid (46) remains.

12. Magnetic mounting according to one of Claims 9 to 11, **characterized in that** at least one spacer (47) is provided, by means of which the two seal parts (39, 40) are spaced apart from one another even in the event of a displacement.

13. Magnetic mounting according to Claim 12, **characterized in that** the spacer (47) is a non-positive bearing allowing a rotation of the two seal parts (39, 40) with respect to one another.

14. Magnetic mounting according to Claim 13, **characterized in that** the bearing comprises a bearing ring (49) which is acted upon by a return force (48) and by means of which the two seal parts (39, 40) are pressed away from one another.

## Revendications

1. Palier magnétique d'un arbre de rotor dans un stator en utilisant un supraconducteur à haute T_{C}, comprenant une première partie de palier solidaire en rotation de l'arbre du rotor et ayant une disposition d'éléments magnétiques permanents disposés côte à côte avec des éléments de guidage du flux interposés entre eux, et une deuxième partie de palier prévue sur le stator et ayant une structure en matériau supraconducteur à haute T_{C}, qui sont séparées l'une de l'autre par un jeu de palier, **caractérisé en ce qu'**il est prévu des moyens (15, 37) d'étanchéité pour rendre étanche le jeu (14, 36) du palier vis-à-vis d'une pénétration de l'air ambiant, ces moyens autorisant un déplacement de la première partie (3, 23) de palier par rapport à la deuxième partie (9, 30) de palier dans la direction perpendiculaire au jeu de palier, tout en conservant l'étanchéité.

2. Palier magnétique suivant la revendication 1, **caractérisé en ce que** les moyens (15, 37) d'étanchéité sont constitués sous la forme d'éléments (16, 17, 38) d'étanchéité annulaires qui assurent l'étanchéité en direction de l'arbre (2, 22) du rotor ou en direction de la première partie (3, 23) du palier.

3. Palier magnétique suivant la revendication 2, **caractérisé en ce que** les éléments (16, 17, 38) d'étanchéité annulaires ont une élasticité propre suffisante autorisant le déplacement de la première partie (3, 23) du palier par rapport à la deuxième partie (9, 30) du palier.

4. Palier magnétique suivant la revendication 2, **caractérisé en ce que** les éléments (16, 17) d'étanchéité annulaires sont maintenus sur la carcasse (8) du stator par un tronçon (18) d'une élasticité suffisante.

5. Palier magnétique suivant la revendication 4, **caractérisé en ce qu'**il est prévu sur la carcasse (8) du stator, de part et d'autre du jeu (14) de palier, un tronçon (18) de carcasse élastique s'étendant sensiblement parallèlement à l'arbre (2) du rotor.

6. Palier magnétique suivant la revendication 5, **caractérisé en ce que** le tronçon de carter (18) est constitué sous la forme d'un tronçon (19) de tube ondulé ou de tube souple.

7. Palier magnétique suivant l'une des revendications précédentes, **caractérisé en ce qu'**il est prévu au moins une entrée (20) d'un gaz de balayage dans la zone du jeu (14) du palier.

8. Palier magnétique suivant l'une des revendications précédentes, **caractérisé en ce qu'**il est prévu comme moyens (15, 37) d'étanchéité ou comme élément (16, 17, 38) d'étanchéité des anneaux (17) d'étanchéité à lamelles, des anneaux (17) d'étanchéité à labyrinthe, des anneaux d'étanchéité à lèvres ou des étanchéités (16, 38) ferrofluidiques.

9. Palier magnétique suivant la revendication 8, **caractérisé en ce qu'**une étanchéité (38) ferrofluidique comporte une première partie (39) d'étanchéité qui est disposée du côté du stator et une deuxième partie (40) d'étanchéité qui est disposée du côté de l'arbre du rotor, chaque partie (39, 40) d'étanchéité comprenant un élément (41, 44) annulaire magnétique permanent à élément (42, 45) associé annulaire de guidage du flux, le ferrofluide (46) étant enfermé dans le jeu du palier entre les éléments (42, 45) de guidage du flux disposés l'un au-dessus de l'autre, et les deux parties (39, 40) d'étanchéité pouvant, lors d'un mouvement de l'arbre (22) du rotor par rapport au stator (29), coulisser l'une par rapport à l'autre tout en maintenant le ferrofluide (46) enfermé.

10. Palier magnétique suivant la revendication 9, **caractérisé en ce que** les éléments (41, 44) magnétiques permanents et les éléments (42, 45) de guidage du flux des deux parties (39, 40) d'étanchéité ont respectivement sensiblement le même diamètre intérieur et le même diamètre extérieur.

11. Palier magnétique suivant la revendication 9 ou 10, **caractérisé en ce que** la largeur de la surface de chevauchement, délimitant l'entrefer, des éléments (42, 45) de guidage du flux est telle que pour un coulissement maximum des parties (39, 40) d'étanchéité l'une par rapport à l'autre, il subsiste un chevauchement minimum garantissant que tout le ferrofluide (46) est enfermé.

12. Palier magnétique suivant l'une des revendications 9 à 11, **caractérisé en ce qu'**il est prévu au moins une entretoise (47) au moyen de laquelle les deux parties (39, 40) d'étanchéité sont maintenues à distance l'une de l'autre, même lors d'un coulissement.

13. Palier magnétique suivant la revendication 12, **caractérisé en ce que** l'entretoise (47) est un palier agissant par force et permettant une rotation des deux parties (39, 40) d'étanchéité l'une par rapport à l'autre.

14. Palier magnétique suivant la revendication 13, **caractérisé en ce que** le palier constituant l'entretoise comprend un anneau (49) de palier qui est soumis à une force (48) de rappel et au moyen duquel les deux parties (39, 40) d'étanchéité sont écartées l'une de l'autre.
